# EUROPEAN PATENT SPECIFICATION

(11) **EP 3 875 528 B1**
(45) Date of publication and mention of the grant of the patent: **14.01.2026**
(21) Application number: 19880336.3
(22) Date of filing: 25.10.2019
(51) Int. Cl.: C08L 9/00, B60C 1/00, C08F 8/04, C08L 57/02, C08L 21/00

(54) **USE OF A RUBBER COMPOSITION IN A PNEUMATIC TIRE**
VERWENDUNG EINER KAUTSCHUKZUSAMMENSETZUNG IN EINEM LUFTREIFEN
UTILISATION D'UNE COMPOSITION DE CAOUTCHOUC DANS UN PNEUMATIQUE

(30) Priority: 30.10.2018 JP 2018204238
(43) Date of publication of application: 08.09.2021
(73) Proprietor: Zeon Corporation, Tokyo 100-8246 (JP)
(72) Inventor: NOZAWA, Atsushi, Tokyo 100-8246 (JP); ODA, Ryoji, Tokyo 100-8246 (JP)
(74) Representative: Kraus & Lederer PartGmbB
(86) International application number: PCT/JP2019/041935
(87) International publication number: WO 2020/090665

(56) References cited:
- WO-A1-2017/171025
- JP-A- 2008 169 298
- JP-A- 2008 169 298
- JP-A- 2015 108 045
- JP-A- H02 160 886
- JP-A- H1 121 397

## Description

### TECHNICAL FIELD

The present invention relates to the use of a rubber composition, and more particularly of a rubber composition capable of obtaining a cross-linked rubber excellent in rolling resistance and wear resistance, for a material of tire portion.

### BACKGROUND ART

Recently, tires for automobiles, while low fuel consumption is strongly required from environmental problems and resource problems, from the viewpoint of safety, for example, it is required to improve the wet grip property. A cross-linked product of a rubber composition (hereinafter, sometimes simply referred to as a cross-linked rubber) in which silica is blended as a filler to a rubber component has a smaller rolling resistance when constituting a tire than a cross-linked product of a rubber composition in which carbon black is blended. For this reason, by using a cross-linked product obtained by using a rubber composition containing silica to make tires, it is possible to obtain tires excellent in low fuel consumption.

However, even if silica is blended into a conventional rubber component, there is a problem in that the processability of the rubber composition before cross-linking is poor due to insufficient affinity between the rubber component and silica and easy separation of these, and that the cross-linked rubber obtained by cross-linking these has insufficient rolling resistance when constituting a tire.

To this, for the purpose of improving processability, rolling resistance of a tire, and wet grip property, Patent Document 1 proposed a rubber composition which is obtained by blending 1 part by mass to 200 parts by mass of a hydrocarbon resin with respect to 100 parts by mass of a diene-based rubber, wherein the hydrocarbon resin contains an aliphatic monomer unit and an aromatic monomer unit, a content of a monomer unit having a structure in which two or more cyclic structures are bonded in the above aromatic monomer unit is 50% by mass or more, a weight average molecular weight (Mw) of the hydrocarbon resin is within a range of 700 to 6000, and a softening point of the hydrocarbon resin is within a range of 80°C to 150°C.

However, Patent Document 1 does not investigate a rubber composition for obtaining a cross-linked rubber excellent in rolling resistance and wear resistance.

### RELATED ART

### PATENT DOCUMENTS

Patent Document 1: WO 2018/101360

### SUMMARY OF THE INVENTION

### PROBLEM TO BE SOLVED BY THE INVENTION

The present invention has been made in view of such circumstances, and the object of the present invention is the use of a rubber composition capable of obtaining a cross-linked rubber excellent in rolling resistance and wear resistance for a material of tire portion.

### MEANS FOR SOLVING THE PROBLEM

As a result of extensive studies to achieve the above object, the present inventors have found that, by using for a material of tire portion a rubber composition containing a rubber composition obtained by hydrogenating a specific hydrocarbon resin so as to have a specific ratio of hydrogenation, excellent processability can be achieved and at the same time a cross-linked rubber having excellent tensile strength, elongation and wet grip property and particularly excellent rolling resistance and wear resistance can be obtained, thereby completed the present invention.

That is there is provided a rubber composition comprising a diene-based rubber and a hydrogenated hydrocarbon resin, wherein: the content of the hydrogenated hydrocarbon resin is 1 to 200 parts by mass with respect to 100 parts by mass of the diene-based rubber; the hydrogenated hydrocarbon resin is obtained by hydrogenating a hydrocarbon resin containing a C5-based petroleum resin or a C5/C9-based petroleum resin; a hydrogenation rate of the hydrogenated hydrocarbon resin is within a range of 0.1 to 80%; a weight average molecular weight (Mw) of the hydrogenated hydrocarbon resin is within a range of 700 to 6,000; and a softening point of the hydrogenated hydrocarbon resin is within a range of 80 to 150°C.

In the rubber composition used in the present invention, it is preferable that the hydrogenated hydrocarbon resin is obtained by hydrogenating a hydrocarbon resin containing an aliphatic monomer unit and an aromatic monomer unit.

In the rubber composition used in the present invention, it is preferable that the hydrocarbon resin contains: 20 to 70% by mass of a 1,3-pentadiene monomer unit; 1 to 35% by mass of a C4-C6 alicyclic monoolefin monomer unit; 1 to 50% by mass of a C4-C8 acyclic monoolefin monomer unit; 0 to 10% by mass of an alicyclic diolefin monomer unit; and 0 to 50% by mass of an aromatic monomer unit, a number average molecular weight (Mn) of the hydrogenated hydrocarbon resin is within a range of 400 to 3,000, a Z-average molecular weight (Mz) of the hydrogenated hydrocarbon resin is within a range of 1,500 of 20,000, a ratio of weight average molecular weight to number average molecular weight (Mw/Mn) of the hydrogenated hydrocarbon resin is within a range of 1.0 to 4.0, and a ratio of Z-average molecular weight to weight average molecular weight (Mz/Mw) of the hydrogenated hydrocarbon resin is within a range of 1.0 to 4.0.

Further, according to the present invention, there is provided a pneumatic tire wherein a tread is formed through the use of the rubber composition.

### EFFECTS OF INVENTION

According to the present invention, it is possible to provide a rubber composition capable of obtaining a cross-linked rubber excellent in rolling resistance and wear resistance.

### DESCRIPTION OF EMBODIMENTS

Hereinafter, each component of the rubber composition used in the present invention will be described.

### <Hydrogenated hydrocarbon resin>

The hydrogenated hydrocarbon resin used in the present invention is obtained by hydrogenating a hydrocarbon resin containing a C5-based petroleum resin or a C5/C9-based petroleum resin, has a hydrogenation rate within a range of 0.1 to 80%, has a weight average molecular weight (Mw) within a range of 700 to 6,000, and has a softening point within a range of 80 to 150°C.

The hydrogenated hydrocarbon resin used in the present invention is obtained by hydrogenating a hydrocarbon resin containing a C5-based petroleum resin or a C5/C9-based petroleum resin.

In the following, first, a hydrocarbon resin prior to hydrogenation (hereinafter, sometimes simply referred to as a hydrocarbon resin) will be described in detail, and then a hydrogenated hydrocarbon resin obtained by hydrogenating the hydrocarbon resin will be described.

### <Hydrocarbon resin>

The hydrocarbon resin is a raw material resin prior to hydrogenation and containing a C5-based petroleum resin or a C5/C9-based petroleum resin.

The hydrocarbon resin used in the present invention contains a C5-based petroleum resin obtained by subjecting a C5 fraction to addition polymerization, or a C5/C9-based petroleum resin obtained by subjecting a C5 fraction and a C9 fraction to addition polymerization.

The C5 fraction is a fraction containing a monomer having 5 carbon atoms as a main component. Of the monomers contained in the C5 fraction, an addition-polymerizable monomer is used as a constituent of a monomer unit of the C5-based petroleum resin or the C5/C9-based petroleum resin. Examples of the addition-polymerizable monomer contained in the C 5 fraction include aliphatic monomers such as 1,3-pentadiene, cyclopentene, isobutylene, isoprene, and cyclopentadiene. In addition, a dimer formed by the above-described monomer may be contained in the C5 fraction, and dimers thereof may also be used as a constituent component of the monomer unit of the C5-based petroleum resin. Such dimers can include, for example, diisobutylene, dicyclopentadiene, and the like.

The C9 fraction is a fraction containing a monomer having 9 carbon atoms as a main component. Among the monomers contained in the C9 fraction, an addition-polymerizable monomer is used as a constituent of a monomer unit of a C5/C9-based petroleum resin. Examples of the addition-polymerizable monomer contained in the C9 fraction include aromatic monomers such as styrene, α-methylstyrene, β-methylstyrene, vinyltoluene, and indene.

When not only an addition-polymerizable monomer but also a non-addition polymerizable monomer are contained in the C5 fraction and the C9 fraction, the non-addition polymerizable monomer can be used as a solvent at the time of polymerization.

The C5 fraction and the C9 fraction may be any one having a monomer which may be contained as a C5 fraction and a C9 fraction obtained when naphtha is thermally decomposed. In other words, for example, the monomer contained in the C5 fraction is not limited to a monomer obtained as a C5 fraction by actually thermally decomposing naphtha, and the monomer contained in the C5 fraction may be a monomer which may be contained as a C5 fraction by thermally decomposing naphtha and is obtained by another synthetic method or the like.

In addition, the hydrocarbon resin used in the present invention may be any one containing the C5-based petroleum resin or the C5/C9-based petroleum resin, and therefore, it is usually one containing an aliphatic monomer unit.

### (Aliphatic monomer unit)

As an aliphatic monomer for forming the aliphatic monomer unit, any aliphatic monomer containing no aromatic ring and containing at least an unsaturated hydrocarbon may be used, and examples of such an aliphatic monomer include 1,3-pentadiene, a C4-C6 alicyclic monoolefin monomer, a C4-C8 acyclic monoolefin monomer, an alicyclic diolefin monomer, and the like. Further, a mixture containing these aliphatic monomers may be added to a polymerization reaction system in producing a hydrocarbon resin. At this time, the aliphatic monomer contained in the mixture is used as a component of a monomer unit constituting the hydrocarbon resin. Note that, an addition-polymerizable component other than an aliphatic monomer contained in the mixture may also be used as a constituent component of a monomer unit of the hydrocarbon resin, and a non-addition polymerizable component may be used as a solvent at the time of polymerization. As a mixture containing such an aliphatic monomer, for example, a C5 fraction containing 1,3-pentadiene, cyclopentene, isobutylene, and the like as an aliphatic monomer can be suitably used.

The hydrocarbon resin preferably contains, as the aliphatic monomer unit, a 1,3-pentadiene unit, a C4-C6 alicyclic monoolefin monomer unit, and a C4-C8 acyclic monoolefin monomer unit, and may further include an alicyclic diolefin monomer unit in addition to these.

The content of the 1,3-pentadiene monomer unit in the hydrocarbon resin is preferably 10 to 70% by mass, more preferably 15 to 60% by mass, still more preferably 20 to 55% by mass, furthermore preferably 25 to 50% by mass, and particularly preferably 25 to 48% by mass. By setting the content of the monomer unit derived from 1,3-pentadiene within the above range, it is possible to further enhance the rolling resistance and the wear resistance of the obtained cross-linked rubber. The cis/trans isomer ratio in 1,3-pentadiene may be an arbitrary ratio, and is not particularly limited.

The C4-C6 alicyclic monoolefin monomer is a hydrocarbon compound having 4 to 6 carbon atoms and having one ethylenically unsaturated bond and a non-aromatic ring structure in its molecular structure. Specific examples of the C4-C6 alicyclic monoolefin monomer include cyclobutene, cyclopentene, cyclohexene, methylcyclobutene, and methylcyclopentene.

The content of the C4-C6 alicyclic monoolefin monomer unit in the hydrocarbon resin is preferably 1 to 35% by mass, more preferably 3 to 30% by mass, still more preferably 5 to 28% by mass, furthermore preferably 7 to 26% by mass, and particularly preferably 7 to 25% by mass. By setting the content of the C4-C6 alicyclic monoolefin monomer unit within the above range, it is possible to further enhance the rolling resistance and the wear resistance of the obtained cross-linked rubber.

As the C4-C6 alicyclic monoolefin monomer, a ratio of each compound corresponding to this may be any ratio, and is not particularly limited, but it is preferable that at least cyclopentene is contained, and the ratio of cyclopentene in the C4-C6 alicyclic monoolefin monomer is more preferably 50% by mass or more.

The C4-C8 acyclic monoolefin monomer is chain hydrocarbon compound having 4 to 8 carbon atoms and having one ethylenically unsaturated bond without a ring structure in its molecular structure. Specific examples of the C4-C8 acyclic monoolefin monomer include butenes such as 1-butene, 2-butene, and isobutylene (2-methylpropene); pentenes such as 1-pentene, 2-pentene, 2-methyl-1-butene, 3-methyl-1-butene, and 2-methyl-2-butene; hexenes such as 1-hexene, 2-hexene, and 2-methyl-1-pentene; heptenes such as 1-heptene, 2-heptene, 2-methyl-1-hexene; octenes such as 1-octene, 2-octene, 2-methyl-1-heptene, diisobutylene (2,4,4-trimethyl-1-pentene and 2,4,4-trimethyl-1-pentene); and the like.

The content of the C4-C8 acyclic monoolefin monomer unit in the hydrocarbon resin is preferably 1 to 50% by mass, more preferably 5 to 45% by mass, still more preferably 10 to 42% by mass, and particularly preferably 15 to 40% by mass. By setting the content of the C4-C8 acyclic monoolefin monomer unit within the above range, it is possible to further enhance the rolling resistance and the wear resistance of the obtained cross-linked rubber.

As the C4-C8 acyclic monoolefin monomer, a ratio of each compound (including an isomer) corresponding to this may be any ratio, and is not particularly limited, but it is preferable that at least one kind selected from the group consisting of 2-methyl-2-butene, isobutylene, and diisobutylene is contained, and the ratio of the total amount of 2-methyl-2-butene, isobutylene, and diisobutylene in the C4-C8 acyclic monoolefin monomer is more preferably 50% by mass or more.

In addition, the hydrocarbon resin used in the present invention may contain an alicyclic diolefin as a raw material thereof. The alicyclic diolefin is a hydrocarbon compound having two or more ethylenically unsaturated bonds and a non-aromatic ring structure in its molecular structure. Specific examples of the alicyclic diolefin include cyclopentadiene, multimers of cyclopentadiene such as dicyclopentadiene, methylcyclopentadiene, and multimers of methylcyclopentadiene.

The content of the alicyclic diolefin monomer unit in the hydrocarbon resin is preferably 0 to 10% by mass, more preferably 0 to 7% by mass, still more preferably 0 to 5% by mass, and particularly preferably 0 to 3% by mass. By setting the content within the above range, it is possible to further enhance the rolling resistance and the wear resistance of the obtained cross-linked rubber.

In addition, the hydrocarbon resin used in the present invention may contain, as the aliphatic monomer unit, another alicyclic monomer unit than the monomer unit derived from 1,3-pentadiene, the C4-C6 alicyclic monoolefin monomer unit, the C4-C8 acyclic monoolefin monomer unit, and the alicyclic diolefin monomer unit which are described above as long as the effects of the present invention can be obtained.

The other aliphatic monomers used for forming the other aliphatic monomer unit are not particularly limited as long as they are compounds other than the aliphatic monomers described above and are addition-polymerizable which can be subjected to addition copolymerization with 1,3-pentadiene and the like. Examples of the above-mentioned other aliphatic monomers include unsaturated hydrocarbons having 4 to 6 carbon atoms other than 1,3-pentadiene such as 1,3-butadiene, 1,2-butadiene, isoprene, 1,3-hexadiene, and 1,4-pentadiene; alicyclic monoolefins having 7 or more carbon atoms such as cycloheptene; acyclic monoolefins having 3 or less carbon atoms or 9 or more carbon atoms such as ethylene, propylene, and nonene; and the like.

The content of the above-mentioned monomer unit of other monomer in the hydrocarbon resin may be any range in which the effect of the present invention can be obtained, and is not particularly limited, but is preferably 0 to 30% by mass, more preferably 0 to 25% by mass, and still more preferably 0 to 20% by mass.

The content of the aliphatic monomer unit in the hydrocarbon resin is preferably 50 to 100% by mass, more preferably 55 to 99.9% by mass, still more preferably 57 to 95% by mass, particularly preferably 60 to 92% by mass, and most preferably 60 to 90% by mass. By setting the content of the aliphatic monomer unit within the above range, it is possible to further enhance the rolling resistance and the wear resistance of the obtained cross-linked rubber.

### (Aromatic monomer unit)

It is preferable that the hydrocarbon resin used in the present invention contains an aromatic monomer unit in addition to an aliphatic monomer unit. By using one containing an aromatic monomer unit in addition to an aliphatic monomer unit as the hydrocarbon resin, it is possible to further enhance the rolling resistance and the wear resistance of the obtained cross-linked rubber. As an aromatic monomer for forming the aromatic monomer unit, it is sufficient that it has an aromatic ring and can be copolymerized with the aliphatic monomer, and examples thereof include styrene compounds such as styrene, α-methylstyrene, and vinyltoluene; indene compounds such as indene, methylindene, ethylindene, propylindene, butylindene, t-butylindene, sec-butylindene, n-pentylindene, 2-methyl-butylindene, 3-methyl-butylindene, n-hexylindene, 2-methyl-pentylindene, 3-methyl-pentylindene, and 4-methyl-pentylindene; naphthalene compounds such as 1-vinylnaphthalene, 2-vinylnaphthalene, allylnaphthalene, and butenylnaphthalene; fluorene compounds such as 2,7-divinylfluorene, 2-vinylfluorene, allylfluorene, and butenylfluorene; biphenyl compounds such as 4-vinylbiphenyl, 4-vinyl-p-terphenyl; anthracene compounds such as 9-vinylanthracene, 2-vinylanthracene, 9,10-divinylanthracene, allylanthracene, and butenylanthracene; phenanthrene compounds such as 9-vinylphenanthrene and 3-vinylphenanthrene; benzothiophene compounds such as 5-vinylbenzothiophene and 2-vinylbenzothiophene; and the like. Among these, styrene compounds and indene compounds are preferred, and styrene and indene are more preferred. As these aromatic monomers, one kind may be used alone or two or more kinds may be used in combination. Further, a mixture containing these aromatic monomers may be added to a polymerization reaction system in producing a hydrocarbon resin. At this time, the aromatic monomer contained in the mixture is used as a component of the monomer unit constituting the hydrocarbon resin. Note that, an addition-polymerizable component other than the aromatic monomer contained in the mixture is also used as a constituent component of a monomer unit of the hydrocarbon resin, and a non-addition polymerizable component can be used as a solvent at the time of polymerization. As the mixture containing the aromatic monomer, for example, a C9 fraction containing a styrene compound, an indene compound, and the like as the aromatic monomer can be suitably used.

In addition, when the hydrocarbon resin contains, as the aromatic monomer unit, a monomer unit of a monomer having a structure in which two or more cyclic structures are bonded, it is possible to further enhance the rolling resistance and the wear resistance of the obtained cross-linked rubber.

As a monomer constituting the monomer unit of a monomer having a structure in which two or more cyclic structures are bonded, a monomer having one or more aliphatic carbon-carbon unsaturated bonds and a structure in which two or more cyclic structures are bonded in its molecular structure is preferably used. Here, as the structure in which two or more cyclic structures are bonded, any structure may be used as long as it contains one or more aromatic rings among two or more cyclic structures, and may be one containing only aromatic rings or one containing an aromatic ring and a non-aromatic ring structure. In the hydrocarbon resin, the content of the monomer unit of a monomer having a structure in which two or more cyclic structures are bonded is preferably 0.1 to 50% by mass, more preferably 5 to 45% by mass, still more preferably 8 to 43% by mass, and particularly preferably 10 to 40% by mass. By setting the content of the monomer unit of a monomer having a structure in which two or more cyclic structures are bonded within the above range, it is possible to further enhance the rolling resistance and the wear resistance of the obtained cross-linked rubber.

As the above aliphatic carbon-carbon unsaturated bond, any bond having radical polymerizable may be used, and a vinyl group may be preferably used. Note that, when the monomer having a structure in which two or more cyclic structures are bonded is indene, an aliphatic carbon-carbon unsaturated bond is included as a part of a five membered ring of indene.

As the monomer having a structure in which two or more cyclic structures are bonded described above, naphthalene compounds, fluorene compounds, biphenyl compounds, anthracene compounds, phenanthrene compounds, indene compounds and benzothiophene compounds are preferred, indene compounds are more preferable, and indene is still more preferable.

The content of the aromatic monomer unit in the hydrocarbon resin is preferably 0 to 50% by mass, more preferably 0.1 to 45% by mass, still more preferably 5 to 43% by mass, furthermore preferably 8 to 40% by mass, and particularly preferably 10 to 40% by mass. By setting the content of the aromatic monomer unit within the above range, it is possible to further enhance the rolling resistance and the wear resistance of the obtained cross-linked rubber.

It is preferred that the hydrocarbon resin in the present invention comprises 20 to 70% by mass of a 1,3-pentadiene monomer unit, 1 to 35% by mass of a C4-C6 alicyclic monoolefin monomer unit, 1 to 50% by mass of a C4-C8 acyclic monoolefin monomer unit, 0 to 10% by mass of an alicyclic diolefin monomer unit, and 0 to 50% by mass of an aromatic monomer unit. By including such a hydrocarbon resin, it is possible to further enhance the rolling resistance and the wear resistance of the obtained cross-linked rubber.

The content ratio of the above monomer unit is the same in the hydrogenated hydrocarbon resin, and the preferred range of the content ratio in the hydrogenated hydrocarbon resin is also the same as in the hydrocarbon resin.

### (Method for producing hydrocarbon resin prior to hydrogenation)

The method for producing the hydrocarbon resin is not particularly limited as long as polymerizable component (monomer mixture A) containing the above-described C5 fraction and the above-described C9 fraction which is optionally used is suitably subjected to addition polymerization. For example, the hydrocarbon resin can be obtained by addition polymerization using a Friedel Crafts type cationic polymerization catalyst.

Suitable method for producing the hydrocarbon resin includes, for example, a polymerization process comprising the following steps of polymerizing 1,3-pentadiene, the C4-C6 alicyclic monoolefin monomer, the C4-C8 acyclic monoolefin monomer, the alicyclic diolefin monomer, and the aromatic monomer, by using a polymerization catalyst comprising aluminum halide (A) in combination with a halogenated hydrocarbon (B) selected from the group consisting of a halogenated hydrocarbon (B1) having a halogen atom bonded to a tertiary carbon atom and a halogenated hydrocarbon (B2) having a halogen atom bonded to a carbon atom adjacent to a carbon-carbon unsaturated bond. Specifically, it may be mentioned a polymerization process polymerizing 10 to 60% by mass of 1,3-pentadiene, 10 to 30% by mass of the C4-C6 alicyclic monoolefin monomer, 1 to 50% by mass of the C4-C8 acyclic monoolefin monomer, 0 to 10% by mass of the alicyclic diolefin monomer, and 0.1 to 50% by mass of the aromatic monomer using the above catalyst.

Specific examples of the aluminum halide (A) include aluminum chloride (AlCl₃), aluminum bromide (AlBr₃), and the like. Among them, aluminum chloride is suitably used from the viewpoint of versatility and the like.

The amount of the aluminum halide (A) to be used is not particularly limited, but is preferably 0.05 to 10 parts by mass, more preferably 0.1 to 5 parts by mass, with respect to 100 parts by mass of the polymerizable component (monomer mixture A).

In addition, in the polymerization, when the halogenated hydrocarbon (B) is used in combination with the aluminum halide (A), the activity of the polymerization catalyst becomes extremely good.

Specific examples of the halogenated hydrocarbon (B1) having a halogen atom bonded to a tertiary carbon atom as the halogenated hydrocarbon (B) include t-butyl chloride, t-butyl bromide, 2-chloro-2-methylbutane, and triphenylmethyl chloride. Among these, t-butyl chloride is particularly preferably used in view of excellent balance between activity and ease of handling.

Examples of the unsaturated bond in the halogenated hydrocarbon (B2) having a halogen atom bonded to a carbon atom adjacent to a carbon-carbon unsaturated bond as the halogenated hydrocarbon (B) include carbon-carbon double bond and carbon-carbon triple bond, and also include carbon-carbon conjugated double bond in an aromatic ring and the like. Specific examples of such compound include benzyl chloride, benzyl bromide, (1-chloroethyl) benzene, allyl chloride, 3-chloro-1-propyne, 3-chloro-1-butene, 3-chloro-1-butyne, cinnamic chloride, and the like. Of these, benzyl chloride is preferably used in view of excellent balance between activity and ease of handling.

The halogenated hydrocarbon (B) may be used in one type or in combination of two or more types.

The amount of the halogenated hydrocarbon (B) to be used is preferably 0.05 to 50, more preferably 0.1 to 10, in molar ratio to aluminum halide (A).

In performing the polymerization reaction, the order in which the respective components of the monomer mixture and the polymerization catalyst are added to the polymerization reactor is not particularly limited, and may be added in any order, but a method in which the polymerization reaction is initiated by adding the monomer mixture and a part of a component of the polymerization catalyst to the polymerization reactor, then the remaining portion of the polymerization catalyst is added to the polymerization reactor is preferred from the viewpoint of better controlling the polymerization reaction and further enhancing the rolling resistance and the wear resistance of the obtained cross-linked rubber.

Specifically, in producing the hydrocarbon resin, it is preferable to first mix aluminum halide (A) with the alicyclic monoolefin in advance. By performing a contact treatment in which aluminum halide (A) and the alicyclic monoolefin are mixed in advance, generation of a gel can be prevented, and it is possible to further enhance the rolling resistance and the wear resistance of the obtained cross-linked rubber.

The amount of the alicyclic monoolefin mixed with the aluminum halide (A) is preferably at least 5 times (mass ratio) the amount of the aluminum halide (A). If the amount of the alicyclic monoolefin is too small, the effect of preventing gel formation may be reduced. The mass ratio of the alicyclic monoolefin to the aluminum halide (A) is, in the mass ratio of "alicyclic monoolefin : aluminum halide (A)", preferably 5:1 to 120:1, more preferably 10:1 to 100:1, and still more preferably 15:1 to 80:1. When a larger amount of alicyclic monoolefin is used than this ratio, the catalytic activity may decrease and the polymerization may not proceed sufficiently.

When the aluminum halide (A) and the alicyclic monoolefin are mixed in advance, these charge orders are not particularly limited, and the aluminum halide (A) may be charged into the alicyclic monoolefin, or conversely, the alicyclic monoolefin may be charged into the aluminum halide (A). Mixing is usually accompanied by generation of heat, so suitable diluents can also be used. As the diluent, a solvent to be described later can be used.

After preparing a "mixture M" of the aluminum halide (A) and the alicyclic monoolefin as described above, it is preferable to mix a "mixture a" containing at least 1,3-pentadiene and the acyclic monoolefin and the "mixture M". The above "mixture a" may contain the alicyclic diolefin and/or the aromatic monomer.

The method for preparing the "mixture a" is not particularly limited, and each pure compound may be mixed to obtain the targeted "mixture a", or for example, a mixture containing a targeted monomer derived from a fraction of a naphtha decomposition product and the like may be used to obtain the targeted "mixture a". For example, in order to incorporate 1,3-pentadiene and the like into the "mixture a", a C5 fraction after extraction of isoprene and cyclopentadiene (including a multimer thereof) can be suitably used.

It is preferable to further mix the halogenated hydrocarbon (B) together with the "mixture a" and the "mixture M". The charge order of these three is not particularly limited.

From the viewpoint of better controlling the polymerization reaction, it is preferable to add a solvent to the polymerization reaction system to perform the polymerization reaction. The type of the solvent is not particularly limited as long as it does not inhibit the polymerization reaction, but a saturated aliphatic hydrocarbon or an aromatic hydrocarbon is suitable. As the saturated aliphatic hydrocarbons used as a solvent include, for example, chain saturated aliphatic hydrocarbons having 5 to 10 carbon atoms such as n-pentane, n-hexane, 2-methylpentane, 3-methylpentane, n-heptane, 2-methylhexane, 3-methylhexane, 3-ethylpentane, 2,2-dimethylpentane, 2,3-dimethylpentane, 2,4-dimethylpentane, 3,3-dimethylpentane, 2,2,3-trimethylbutane, and 2,2,4-trimethylpentane; cyclic saturated aliphatic hydrocarbons having 5 to 10 carbon atoms such as cyclopentane, cyclohexane, cycloheptane, and cyclooctane. The aromatic hydrocarbons used as solvents include, for example, aromatic hydrocarbons having 6 to 10 carbon atoms such as benzene, toluene, and xylene. As the solvent, one kind may be used alone, or two or more kinds may be used as a mixed solvent.

The amount of the solvent to be used is not particularly limited, but is preferably 10 to 1,000 parts by mass, more preferably 50 to 500 parts by mass, with respect to 100 parts by mass of the polymerizable component (monomer mixture A). For example, a mixture of an addition-polymerizable component and a non-addition polymerizable component, such as a mixture of cyclopentane and cyclopentene derived from the C5 fraction, may be added to the polymerization reaction system so that the addition-polymerizable component may be used as a component of the monomer mixture and the non-addition polymerizable component may be used as a solvent.

The polymerization temperature at the time of performing the polymerization reaction is not particularly limited, but is preferably - 20°C to 100°C, more preferably 10°C to 70°C. If the polymerization temperature is too low, the polymerization activity may decrease and the productivity may be inferior, and if the polymerization temperature is too high, the rolling resistance and the wear resistance of the obtained cross-linked rubber may be inferior. The pressure at the time of performing the polymerization reaction may be either under atmospheric pressure or under pressure. The polymerization reaction time can be appropriately selected, but is usually 10 minutes to 12 hours, preferably 30 minutes to 6 hours.

The polymerization reaction can be stopped by adding a polymerization terminator such as methanol, an aqueous sodium hydroxide solution, and an aqueous ammonia solution to the polymerization reaction system at a time when a desired polymerization conversion is obtained.

In the method for producing the hydrocarbon resin described above, at least the above polymerization step may be contained, but other steps may be contained if necessary.

The other steps include, for example, a catalyst residue removal step of removing a catalyst residue insoluble in the solvent by filtration or the like, which is generated when a polymerization catalyst is deactivated by adding a polymerization terminator after a polymerization step, and a recovery step of obtaining a solid hydrocarbon resin by removing an unreacted monomer and the solvent after stopping a polymerization reaction by a polymerization step, further removing an oligomer component having a low molecular weight by steam distillation or the like, and cooling the oligomer component.

Further, as the other step, there may be contained a contact treatment step in which, after the catalyst residue removal step and prior to the recovery step, the catalyst residue removed mixture after removing the catalyst residue insoluble in the solvent is brought into contact with the adsorbent to obtain an adsorbent treated mixture. By containing the contact treatment step, the rolling resistance and the wear resistance of the obtained cross-linked rubber can be further enhanced.

The above other steps may be performed after a hydrogenation step in the method for producing the hydrogenated hydrocarbon resin described later.

Further, the adsorbent used in the above contact treatment step is not particularly limited, and may be a chemical adsorbent or a physical adsorbent.

Examples of the above-mentioned chemical adsorbent include zinc-based adsorbents such as basic zinc carbonate, zinc oxide, zinc sulfate, zinc laurate, zinc stearate, and zinc myristate; zirconium-based adsorbents such as zirconium oxide, zirconium hydroxide, and zirconium phosphate; manganese-based adsorbents such as manganese dioxide; cobalt-based adsorbents such as cobalt chloride; copper-based adsorbents such as copper chloride and copper oxide; amine-based adsorbents such as polyamine compounds, and the like.

Examples of the above-mentioned physical adsorbent include a zeolite-based adsorbent generically referred to as a group of hydrous aluminosilicate minerals such as sodium aluminum silicate; silicon dioxide; magnesium oxide; silica gel; silica-alumina; aluminum silicate; activated alumina; acidic clay; activated clay; dawsonite compounds; and hydrotalcite compounds.

As the adsorbents, one kind may be used alone, or two or more kinds may be used in combination. In addition, when two or more kinds of adsorbents are used in combination, two or more kinds of chemical adsorbents may be used in combination, or two or more kinds of physical adsorbents may be used in combination, or one or more kinds of chemical adsorbents and one or more kinds of physical adsorbents may be used in combination, and for example, a chemical adsorbent may be supported on a physical adsorbent. In particular, from the viewpoint of obtaining a cross-linked rubber more excellent in rolling resistance and wear resistance, among these adsorbents, chemical adsorbents are preferably used, more preferably a zinc-based adsorbent, and particularly preferably a basic zinc carbonate.

In the above contact treatment step, a method of bringing the catalyst residue removed mixture into contact with the adsorbent is not particularly limited. For example, there may be mentioned a batch treatment method in which the catalyst residue removed mixture and the adsorbent are coexisted in a vessel appropriately selected and stirred if necessary and brought into contact, or a continuous treatment method in which the adsorbent is filled in a packed tower in advance and the catalyst residue removed mixture is brought into contact with the adsorbent by flowing through this.

When the catalyst residue removed mixture and the adsorbent are brought into contact with each other by the batch treatment method, the amount of the adsorbent to be used is not particularly limited, but is usually 0.01 to 5.0 parts by mass, preferably 0.03 to 3.0 parts by mass, and more preferably 0.05 to 2.0 parts by mass, with respect to 100 parts by mass of the hydrocarbon resin contained in the catalyst residue removed mixture.

The temperature at which the catalyst residue removed mixture is brought into contact with the adsorbent is not particularly limited, but is usually 10 to 70°C. Also, the treatment time is not particularly limited, but is usually 0.1 to 2 hours.

When the catalyst residue removed mixture and the adsorbent are brought into contact with each other in the batch treatment method, the adsorbent can be removed from the catalyst residue removed mixture by filtration or the like, if necessary. In addition, when there is no problem in the use of the hydrocarbon resin and the hydrogenated hydrocarbon resin even if the adsorbent remains, the catalyst residue removed mixture may be subjected to the next step without removing the adsorbent from the catalyst residue removed mixture.

### <Hydrogenated hydrocarbon resin>

The hydrogenated hydrocarbon resin used in the present invention can be obtained by hydrogenating the above-described hydrocarbon resin.

The hydrogenated hydrocarbon resin used in the present invention may have a hydrogenation rate within a range of 0.1 to 80%, preferably within a range of 10 to 60%, more preferably within a range of 20 to 50%, and still more preferably within a range of 20 to 40%. By setting the hydrogenation rate in the above range, the rolling resistance and wear resistance of the obtained cross-linked rubber can be further enhanced. The hydrogenation rate means a proportion of hydrogenated parts among the total non-aromatic carbon-carbon double bond of the hydrocarbon resin prior to hydrogenation.

In addition, as the carbon-carbon double bond in the above hydrocarbon resin, in addition to the non-aromatic carbon-carbon double bond (mainly carbon-carbon double bond of the main chain), an aromatic carbon-carbon double bond (carbon-carbon double bond in the aromatic ring) is present. It is preferable that the aromatic carbon-carbon double bond is not hydrogenated as much as possible, and among the total aromatic carbon-carbon double bonds, the hydrogenated ratio is preferably 10% or less, more preferably 7% or less, and still more preferably 0%.

The hydrogenation rate can be determined from the difference in the non-aromatic carbon-carbon double bond possessed by the hydrocarbon resin prior to hydrogenation and the non-aromatic carbon-carbon double bond possessed by the hydrogenated hydrocarbon resin after hydrogenation. Here, the non-aromatic carbon-carbon double bonds of the respective resins can be obtained by performing the ¹H-NMR spectrum measurement. The ¹H-NMR spectrum measurement can be performed using deuterated chloroform as a solvent, and using JMN-AL seriesAL400 manufactured by JEOL Corporation as an NMR measurement device.

Further, the weight average molecular weight (Mw) of the hydrogenated hydrocarbon resin after hydrogenation may be within a range of 700 to 6,000, preferably within a range of 900 to 4,500, and more preferably within a range of 1,000 to 4,000. By setting the weight average molecular weight (Mw) in the above range, the processability of the obtained rubber composition and the balance of the tensile strength, elongation, wet grip property, rolling resistance, and wear resistance of the obtained cross-linked rubber can be further enhanced.

The number average molecular weight (Mn) of the hydrogenated hydrocarbon resin after hydrogenation is preferably within a range of 400 to 3,000, more preferably within a range of 450 to 2,500, and still more preferably within a range of 500 to 2,000. By setting the number average molecular weight (Mn) in the above range, the processability of the obtained rubber composition and the balance of the tensile strength, elongation, wet grip property, rolling resistance, and wear resistance of the obtained cross-linked rubber can be further enhanced.

The Z-average molecular weight (Mz) of the hydrogenated hydrocarbon resin after hydrogenation is preferably within a range of 1,500 to 20,000, more preferably within a range of 1,800 to 10,000, and still more preferably within a range of 2,000 to 8,000. By setting the Z-average molecular weight (Mz) in the above range, the processability of the obtained rubber composition and the balance of the tensile strength, elongation, wet grip property, rolling resistance, and wear resistance of the obtained cross-linked rubber can be further enhanced.

In the present invention, the weight average molecular weight (Mw), the number average molecular weight (Mn), and the Z-average molecular weight (Mz) of the hydrogenated hydrocarbon resin are determined as a value in terms of polystyrene by measurement of high performance liquid chromatography.

Further, the ratio (Mw/Mn) of the weight average molecular weight to the number average molecular weight of the hydrogenated hydrocarbon resin is preferably within a range of 1.0 to 4.0, more preferably within a range of 1.2 to 3.5, and still more preferably within a range of 1.4 to 3.0. When the above-mentioned ratio is within the above-mentioned range, the rolling resistance and the wear resistance of the obtained cross-linked rubber can be further enhanced.

The ratio (Mz/Mw) of the Z-average molecular weight to the weight average molecular weight of the hydrogenated hydrocarbon resin is preferably within a range of 1.0 to 4.0, more preferably within a range of 1.2 to 3.5, and still more preferably within a range of 1.4 to 3.0. When the above-mentioned ratio is within the above-mentioned range, the rolling resistance and the wear resistance of the obtained cross-linked rubber can be further enhanced.

The softening point of the hydrogenated hydrocarbon resin may be within a range of 80 to 150°C, preferably within a range of 85 to 145°C, and more preferably within a range of 90 to 140°C. By setting the softening point within the above range, it is possible to further enhance the rolling resistance and wear resistance of the obtained cross-linked rubber.

The softening point in the present invention can be measured according to JIS K 2207 for the hydrogenated hydrocarbon resin.

As a method for producing the hydrogenated hydrocarbon resin, for example, a method containing a hydrogenation step of hydrogenating the hydrocarbon resin can be used.

In the hydrogenation step, hydrogenation of the hydrocarbon resin can be performed by bringing the hydrocarbon resin into contact with hydrogen in the presence of a hydrogenation catalyst.

As the hydrogenation catalyst to be used, those described in JP-B-58-43412, JP-A-60-26024, JP-A-64-24826, JP-A-1-138257, JP-A-7-41550, and the like can be used, and either a homogeneous catalyst or a heterogeneous catalyst can be used.

The homogeneous catalysts include, for example, catalyst systems of combinations of transition metal compounds and alkali metal compounds such as combinations of cobalt acetate/triethylaluminum, nickel acetylacetonate/triisobutylaluminum, titanocene dichloride/n-butyllithium, zirconocene dichloride/sec-butyllithium, and tetrabutoxytitanate/dimethylmagnesium; noble metal complex catalysts such as dichloro bis(triphenylphosphine)palladium, chlorohydridecarbonyl tris(triphenylphosphine)ruthenium, chloro tris(triphenylphosphine)rhodium, and the like.

Examples of the heterogeneous catalyst include those in which a hydrogenated catalyst metal such as Ni and Pd is supported on a carrier. Examples of the carrier include silica, alumina, silica alumina, and diatomaceous earth. Among them, a Ni catalyst supported on silica is preferred.

The hydrogenation reaction may be performed directly on the hydrocarbon resin, or alternatively, the hydrocarbon resin may be dissolved in an organic solvent and performed in an organic solvent. From the viewpoint of ease of operation, it is preferable to perform directly on the hydrocarbon resin. There is no particular limitation on the organic solvent used for dissolving the hydrocarbon resin as long as it is inert to the catalyst, but a hydrocarbon-based solvent is usually used because of the excellent solubility of the produced hydrogenated product.

Examples of the hydrocarbon-based solvent include aromatic hydrocarbons such as benzene and toluene; aliphatic hydrocarbons such as n-pentane and hexane; alicyclic hydrocarbons such as cyclohexane and decalin; and among these, cyclic aromatic hydrocarbons and alicyclic hydrocarbons are preferred. As these organic solvents, one kind may be used alone, or two or more kinds may be used in combination. As the organic solvent, the solvent used for the polymerization of the hydrocarbon resin may be used.

There is no particular limitation on the method of bringing the hydrocarbon resin into contact with the hydrogen in the presence of the hydrogenation catalyst. For example, there may be mentioned a batch treatment method in which the hydrocarbon resin and the hydrogenation catalyst are coexisted in a vessel appropriately selected and stirred if necessary and brought into contact with hydrogen, or a continuous treatment method in which the hydrogenation catalyst is filled in a packed tower in advance and the hydrocarbon resin is brought into contact with hydrogen while flowing through this.

The hydrogenation reaction can be performed according to a conventional method. By appropriately adjusting the reaction conditions such as the type of the hydrogenation catalyst and the reaction temperature, the ratio of hydrogenation of the hydrocarbon resin can be adjusted.

When the homogeneous catalyst is used as the hydrogenation catalyst, the ratio of hydrogenation of the hydrocarbon resin can be increased. As the homogeneous catalyst, a ruthenium homogeneous catalyst is suitable. The reaction temperature is preferably 100 to 200°C, more preferably 130 to 195°C. Further, when the heterogeneous catalyst is used as the hydrogenation catalyst, the ratio of hydrogenation of the hydrocarbon resin can be suppressed. As the heterogeneous catalyst, a nickel heterogeneous catalyst is suitable. The reaction temperature is preferably 150 to 300°C, more preferably 180 to 260°C, and still more preferably 180 to 230°C.

The hydrogen pressure in the hydrogenation reaction is usually 0.01 to 10 MPa, preferably 0.05 to 6 MPa, more preferably 0.1 to 5 MPa, and still more preferably 0.1 to 4.5 MPa, in absolute pressure.

Further, the lower limit of the amount of hydrogen to be used is preferably 0.2 times or more of the amount of hydrogen theoretically necessary for obtaining a resin having a targeted hydrogenation rate, more preferably 1 time or more thereof, still more preferably 1.2 times or more thereof, and particularly preferably 1.8 times or more thereof, and the upper limit of the amount of hydrogen used is preferably 20 times or less of the amount of hydrogen theoretically necessary for obtaining a resin having a targeted hydrogenation rate, more preferably 10 times or less thereof, still more preferably 5 times or less thereof, and particularly preferably 2.4 times or less thereof. By setting the amount of hydrogen used in the above range, the rolling resistance and wear resistance of the obtained cross-linked rubber can be further enhanced.

After completion of the hydrogenation reaction, the hydrogenation catalyst is removed from the reaction solution, if necessary, by centrifugation, filtration, or the like. The centrifugal method or the filtration method is not particularly limited as long as it is a condition capable of removing the catalyst used. Removal by filtration is preferred because it is simple and efficient. When filtered, it may be subjected to pressure filtration or suction filtration, and from the viewpoint of efficiency, a filtration aid such as diatomaceous earth or perlite is preferably used. Further, if necessary, a catalyst deactivating agent such as water and alcohol can be utilized, or an adsorbent such as activated clay or alumina can be added.

### <Diene-based rubber>

In addition to the hydrogenated hydrocarbon resin described above, the rubber composition used in the present invention contains a diene-based rubber. The diene-based rubber is not particularly limited as long as it can be blended with the hydrogenated hydrocarbon resin. Examples of such diene-based rubbers include diene-based rubbers described in JP-A-2015-189873, and more specifically, natural rubber (NR), isoprene rubber (IR), butadiene rubber (BR), styrene-butadiene copolymer rubber (SBR), ethylenepropylene-diene terpolymer (EPDM), and the like, and among these, styrene-butadiene copolymer rubber, butadiene rubber, and the like are preferable. By using the diene rubber described above, the rolling resistance and wear resistance of the obtained cross-linked rubber can be further enhanced. The diene-based rubber may be used alone or in combination of two or more thereof.

Further, the diene-based rubber in the present invention is not particularly limited in its molecular weight and microstructure, and may be end-modified with an amine group, an amide group, a silyl group, an alkoxysilyl group, a carboxyl group, a hydroxyl group, or the like, or may be epoxidized. Further, the diene-based rubber in the present invention may be hydrogenated, but is preferably not hydrogenated.

In the rubber composition used in the present invention, as the blending ratio of the diene-based rubber and the above hydrogenated hydrocarbon resin, the blending of the hydrogenated hydrocarbon resin may be 1 to 200 parts by mass with respect to 100 parts by mass of the diene-based rubber, and is preferably 1 to 70 parts by mass, and more preferably 3 to 35 parts by mass. By setting the blending ratio of the diene-based rubber and the hydrogenated hydrocarbon resin within the above range, it is possible to further enhance the rolling resistance and the wear resistance of the obtained cross-linked rubber.

The rubber composition used in the present invention may be composed of only the diene-based rubber and the hydrogenated hydrocarbon resin, but may further contain other components. Other ingredients that may be included in the rubber composition of the present invention include, for example, a filler, a silane coupling agent, a cross-linking agent, a cross-linking accelerator, a cross-linking activator, an anti-aging agent, an antioxidant, an activator, a process oil, a plasticizer, a lubricant, a tackifier, and the like, and each of these other compounding agents may be blended in the necessary amounts.

As the filler which can be compounded into the rubber composition used in the present invention, the filler generally used in the rubber composition can be used, for example, inorganic hollow fillers such as carbon black, clay, diatomaceous earth, silica, talc, barium sulfate, calcium carbonate, magnesium carbonate, a metal oxide, mica, aluminum hydroxide, various metal powders, wood powders, glass powders, ceramic powders, glass balloons, and silica balloons; organic hollow fillers such as polystyrene, polyvinylidene fluoride, and polyvinylidene fluoride copolymers; may be mentioned.

Examples of the silica include dry method white carbon, wet method white carbon, colloidal silica, and precipitated silica. Among these, preferred is wet white carbon containing hydrous silicic acid as the main component. A carbon-silica dual phase filler comprising carbon black and silica carried on the surface thereof may also be used. Silica may be used alone or in combination. The nitrogen-adsorbing specific surface area (measured by the BET-method according to ASTM D3037-81) of the silica used is preferably 100 to 400 m²/g, more preferably 150 to 350 m²/g. Further, the pH of the silica is preferably 5 to 10.

The amount of silica to be blended in the rubber composition used in the present invention is preferably 10 to 200 parts by mass, more preferably 20 to 150 parts by mass, and still more preferably 30 to 75 parts by mass, with respect to 100 parts by mass of the rubber component in the rubber composition. By setting the blending amount of silica in the above range, the rolling resistance and wear resistance of the obtained cross-linked rubber can be further enhanced.

When silica is used as the filler, a silane coupling agent is preferably used in combination. Examples of the silane coupling agent include vinyltriethoxysilane, β-(3,4-epoxycyclohexyl)ethyltrimethoxysilane, N-(β-aminoethyl)-γ-aminopropyltrimethoxysilane, 3-octathio-1-propyl-triethoxysilane, bis(3-(triethoxysilyl)propyl)disulfide, bis(3-(triethoxysilyl)propyl)tetrasulfide, γ-trimethoxysilylpropyldimethylthiocarbamyl tetrasulfide, and γ-trimethoxysilylpropylbenzothiazyl tetrasulfide. These silane coupling agents may be used alone or in combination. The amount of the silane coupling agent to be blended is preferably 0.1 to 30 parts by mass, more preferably 1 to 15 parts by mass, with respect to 100 parts by mass of silica.

Examples of the carbon black include furnace black, acetylene black, thermal black, channel black, and graphite. These carbon blacks may be used alone or in combination. The blending amount of carbon black is usually 120 parts by mass or less with respect to 100 parts by mass of the rubber component in the rubber composition.

As the filler, one kind may be used alone, or two or more kinds may be used in combination. For example, as the filler, silica and carbon black may be mixed and used.

As the content of the filler other than silica and carbon black, as long as the effect of the present invention is obtained, and for example, the content may be set to 120 parts by mass or less with respect to 100 parts by mass of the rubber component.

The cross-linking agent is not particularly limited, and examples thereof include sulfur, sulfur halide, organic peroxide, quinone dioximes, organic polyvalent amine compounds, and alkylphenol resins having a methylol group. Among these, sulfur is preferably used. The amount of the cross-linking agent to be blended is preferably 0.1 to 15 parts by mass, more preferably 0.5 to 5 parts by mass, and particularly preferably 1 to 4 parts by mass, with respect to 100 parts by mass of the rubber component in the rubber composition.

When sulfur or a sulfur-containing compound is used as the cross-linking agent, use in combination with a cross-linking accelerator and a cross-linking activator is preferred. As the cross-linking accelerator, for example, a sulfenamide-based cross-linking accelerator; guanidine-based cross-linking accelerator; thiourea-based cross-linking accelerator; thiazole-based cross-linking accelerator; thiuram-based cross-linking accelerator; dithiocarbamic acid-based cross-linking accelerator; xanthic acid-based cross-linking accelerator; and the like may be mentioned. Among these, preferred are those containing sulfenamide-based cross-linking accelerator. These cross-linking accelerators are used alone or in combination. The amount of the cross-linking accelerator to be blended is preferably 0.1 to 15 parts by mass, more preferably 0.5 to 5 parts by mass, and particularly preferably 1 to 4 parts by mass, with respect to 100 parts by mass of the rubber component in the rubber composition.

As the cross-linking activator, for example, higher fatty acids such as stearic acid; zinc oxide; and the like may be mentioned. These cross-linking activators are used alone or in combination. The amount of the cross-linking activator to be blended is preferably 0.05 to 20 parts by mass, particularly preferably 0.5 to 15 parts by mass, with respect to 100 parts by mass of the rubber component in the rubber composition.

Further, an anti-aging agent such as a phenol-based stabilizer, a phosphorus-based stabilizer, or a sulfur-based stabilizer may be added to the rubber composition used in the present invention, if desired. The amount of the anti-aging agent to be added may be appropriately determined depending on the type and the like thereof.

In addition, an antioxidant may be added to the rubber composition used in the present invention, if necessary. Examples of antioxidant include, but are not limited to, hindered phenolic compounds such as pentaerythritol tetrakis[3-(3,5-di-t-butyl-4-hydroxyphenyl)propionate], octadecyl-3-(3,5-di-t-butyl-4-hydroxyphenyl)propionate, 2,6-di-t-butyl-p-cresol, di-t-butyl-4-methylphenol; thiodicarboxylate esters such as dilauryltiopropionate; phosphites such as tris(nonylphenyl)phosphite; and the like. As the antioxidant, one kind may be used alone, or 2 or more kinds may be used in combination. The content of the antioxidant is not particularly limited, but is preferably 10 parts by mass or less, more preferably 0.05 to 5 parts by mass, with respect to 100 parts by mass of the rubber component in the rubber composition.

In addition, a resin other than the diene-based rubber and the hydrogenated hydrocarbon resin described above may be blended into the rubber composition used in the present invention. By blending the resin, it is possible to impart tackiness to the rubber composition or to enhance dispersibility of the filler in the rubber composition. As a result, further improvement in rolling resistance and wear resistance of the obtained cross-linked rubber can be expected. Further, as an effect similar to that of the plasticizer, it is also possible to improve the processability of the rubber composition. As the resin, for example, C9-based petroleum resin, dicyclopentadiene-based resin, terpene-based resin, terpene phenol resin, aromatic modified terpene resin, alkylphenol-acetylene resin, rosin-based resin, rosin ester resin, indene-based resin, C9-based resin containing indene, α-methylstyrene-indene copolymer resin, cumaron-indene resin, farnesene-based resin, polylimonene resin, and the like may be mentioned. These resins may be modified, or may be hydrogenated. These resins may be used as single type alone or may be used as two types or more combined. The amount of the resin to be blended is preferably 25 parts by mass or less, with respect to 100 parts by mass of the rubber component in the rubber composition.

In the method for producing the rubber composition used in the present invention, each component may be kneaded according to a conventional method, and for example, a component excluding a thermally unstable component such as cross-linked agent and cross-linking accelerator, the diene-based rubber, and the hydrogenated hydrocarbon resin may be kneaded, and then a thermally unstable component such as cross-linked agent and cross-linking accelerator may be kneaded into the kneaded product to obtain a target rubber composition. The kneading temperature at the time of kneading the component excluding the thermally unstable component, the diene-based rubber, and the hydrogenated hydrocarbon resin is preferably 80 to 200°C, more preferably 120 to 180°C, and the kneading time thereof is preferably 30 seconds to 30 minutes. Further, kneading of the kneaded product and the thermally unstable component is preferably performed after cooling to 100°C or less, more preferably after cooling to 80°C or less.

By using the rubber composition used in the present invention, a cross-linked rubber having excellent rolling resistance and wear resistance can be obtained. The rubber composition used in the present invention utilizes such properties, and is used for materials of tire portions such as treads (cap tread, base tread), carcass, sidewalls, and bead portions of tires, and in particular, can be suitably used for tire portions such as treads, carcass, sidewalls, and bead portions in various tires such as all season tires, high performance tires, and studless tires, and can be particularly suitably used for treads of tires, and in particular, is preferably used for cap treads.

### <Cross-linked rubber>

The cross-linked rubber used in the present invention is prepared by cross-linking the above-mentioned rubber composition of the present invention.

The cross-linked rubber used in the present invention can be produced using the rubber composition used in the present invention, for example, by forming the rubber composition, for example, with a forming machine, an extruder, an injection molding machine, a press, a roll, and the like having a desired shape, and performing a cross-linking reaction by heating to provide a cross-linked rubber having a fixed shape. In this case, the rubber composition may be preliminarily formed and then cross-linked, or may be formed and cross-linked at the same time. The forming temperature is usually 10 to 200°C, preferably 25 to 120°C. The cross-linking temperature is usually 100 to 200°C, preferably 130 to 190°C, and the cross-linking time is usually 1 minute to 24 hours, preferably 2 minutes to 12 hours, particularly preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a general method used for cross-linking the rubber composition, such as press heating, steam heating, oven heating, hot air heating, or the like, may be appropriately selected.

Since the cross-linked rubber used in the present invention thus obtained is obtained using the rubber composition used in the present invention described above, it is excellent in rolling resistance and wear resistance.

The cross-linked rubber of the present invention is preferably used as a material of each part of a tire such as a tread (cap tread, base tread), a carcass, a sidewall, a bead part, etc. in a tire, for example, and can be suitably used in each part of a tire such as a tread, a carcass, a sidewall, and a bead part in various tires such as an all-season tire, a high-performance tire, and a stud tire, for example, can be particularly suitably used for a tread of a tire, and is particularly preferably used for a cap tread.

Next, a pneumatic tire of the present invention will be described. The pneumatic tire of the present invention is characterized in that the rubber composition described above is used for a tread.

The above tread is obtained using the rubber composition described above, that is, is formed using the rubber composition described above, and usually includes a cross-linked rubber used in the present invention obtained by cross-linking the rubber composition used in the present invention described above.

The above-mentioned pneumatic tire may be any one in which the tread thereof is formed using the above-mentioned rubber composition, and other portions may be formed using the above-mentioned rubber composition.

The tread formed using the above rubber composition may be a part of a tread or an entire tread, but preferably includes at least a cap tread.

Further, as a method of producing the pneumatic tire of the present invention, any method can be used as long as it can produce a pneumatic tire having a tread formed using the above composition, and a known method of producing a pneumatic tire can be used.

### EXAMPLES

Hereinafter, the present invention will be described in more details with reference to examples, but these examples should not be construed as limitations to the present invention. Note that "parts" and "%" are based on mass unless otherwise specified.

The test methods performed in this Example and Comparative Example are as follows.

### [Hydrogenation rate (%)]

By performing ¹H-NMR spectrum measurement on the hydrocarbon resin before hydrogenation and the hydrogenated hydrocarbon resin after hydrogenation, the amount of the non-aromatic carbon-carbon double bond was determined, and the hydrogenation rate (%) was measured based on the difference in the amount of the non-aromatic carbon-carbon double bond before and after hydrogenation. ¹H-NMR spectrum measurement was performed by using heavy chloroform as a solvent and JMN-AL seriesAL400 (manufactured by JEOL) as an NMR-measurement device.

### [Number average molecular weight, weight average molecular weight, Z-average molecular weight, and molecular weight distribution]

For the hydrogenated hydrocarbon resin as a sample, gel permeation chromatography analysis was performed to determine the number average molecular weight (Mn), weight average molecular weight (Mw), and Z-average molecular weight (Mz) as the standard polystyrene-converted value, and the molecular weight distribution is shown by the ratio of Mw/Mn and the ratio of Mz/Mw. In the gel permeation chromatography analysis, "HLC-8320GPC" manufactured by Tosoh Corporation was used as a measuring device, and a column was obtained by connecting three of "TSKgel SuperMultiporeHZ" manufactured by Tosoh Corporation, and tetrahydrofuran was used as a solvent at 40°C and a flow rate of 1.0 mL/min.

### [Softening point (°C)]

For the hydrogenated hydrocarbon resin as a sample, the softening point was measured according to JIS K 2207.

### [Mooney viscosity (ML1+4)]

The rubber composition as a sample was measured according to JIS K 6300-1:2001 under the following conditions. This property was shown by an index with reference sample (Comparative Example 1 described later) as 100.
- Test temperature: 100°C
- Rotor type: L type
- Tester: Shimadzu Moony Viscometer SMV-300J, manufactured by Shimadzu Corporation

### [Tensile strength (MPa) and elongation (%)]

The tensile strength (tensile stress (MPa)) and elongation (elongation (%)) of a test piece of a cross-linked rubber as a sample were measured under the following conditions according to JIS K 6251:2010. For these properties were shown by an index with reference sample (Comparative Example 1 described later) as 100.
- Test piece preparation method: sheet was prepared by press cross-linking and the obtained sheet was punched out.
- Test piece shape: Dumbbell-shaped No.3
- Test piece sampling direction: direction parallel to the matrix principle
- Number of test pieces: 3
- Measurement temperature: 23°C
- Test speed: 500 mm/min
- Tester: TENSOMETER 10k, manufactured by ALPHA TECHNOLOGIES
- Tester capacity: Loadcell type 1 kN

### [loss tangent tan δ]

A test piece of a cross-linked rubber as a sample was measured for loss tangent tan δ at 0°C and 60°C under conditions of dynamic strain of 0.5% and 10Hz under the following measuring conditions, according to JIS K 7244-4. This property was shown by an index with reference sample (Comparative Example 1 described later) as 100. The higher the loss tangent tanδ at 0°C, excellent wet grip performance, the lower the loss tangent tanδ at 60°C, excellent rolling resistance.
Measurement item: Dynamic storage modulus E'
: Dynamic loss modulus E"
: Loss tangent tan δ
   - Test piece preparation method: punched out from sheet
   - Test piece shape: Length 50mm × Width 2mm × thickness 2mm
   - Number of test pieces: 1
   - Distance between clamps: 20 mm

### [Wear resistance]

A test piece of a sheet-shaped cross-linked rubber as a sample was measured using an FPS abrasion tester manufactured by Ueshima Seisakusho Co., Ltd. at a load of 1 kgf and a slip ratio of 15%. This property was shown by an index with a measurement value of Comparative Example 1 as 100. The larger the index, the better the wear resistance can be evaluated.

### [Production Example 1]

A mixture of 56.1 parts of cyclopentane and 15.5 parts of cyclopentene was charged into the polymerization reactor, and after the temperature was raised to 70°C, 0.75 parts of aluminum chloride was added ("mixture M₁"). Subsequently, a "mixture a₁" containing 46.7 parts of 1,3-pentadiene, 18.4 parts of isobutylene, 0.1 parts of diisobutylene, 0.1 parts of dicyclopentadiene, 0.2 parts of C4-C6 unsaturated hydrocarbon, 7.2 parts of C4-C6 saturated hydrocarbon, and 19.0 parts of styrene was added continuously to the polymerization reactor containing the "mixture M₁" obtained above and was polymerized for 60 minutes while maintaining the temperature at 70°C. Thereafter, the polymerization reaction was stopped by adding an aqueous sodium hydroxide solution to the polymerization reactor. The types and amounts of components in the polymerization reactor during the polymerization reaction were summarized in Table 1. Then, by removing the precipitate generated by the polymerization stop by filtration, a polymer solution containing a hydrocarbon resin prior to hydrogenation and an unreacted monomer was obtained. Then, the polymer solution was charged into a distillation vessel, heated under a nitrogen atmosphere, and the polymerization solvent and unreacted monomer were removed to obtain a hydrocarbon resin prior to hydrogenation.

Then, the hydrocarbon resin prior to hydrogenation obtained above was supplied to a multi-tube heat exchange type hydrogenation reaction apparatus, and the hydrocarbon resin was hydrogenated. The hydrogenation reaction was performed using a nickel silica catalyst (manufactured by JGC Catalysts and Chemicals Ltd., N108F) as a hydrogenation catalyst, under a condition of a hydrogen pressure of 1.2 MPa, a reaction temperature of 220°C, and a residence time in the reaction tube of 30 minutes, and a hydrogen amount of 1.7 times the amount of hydrogen required for obtaining a hydrogenated hydrocarbon resin having a target hydrogenation rate.

The obtained polymer solution containing a hydrogenated hydrocarbon resin was charged into a distillation vessel and heated under a nitrogen atmosphere to remove the polymerization solvent and the unreacted monomer. Then, at 200°C or higher, while blowing saturated water vapor, the oligomer component of the low molecule was distilled off to obtain a hydrogenated hydrocarbon resin of Production Example 1. For the obtained hydrogenated hydrocarbon resin of Production Example 1, the hydrogenation rate, the number average molecular weight, the weight average molecular weight, the Z-average molecular weight, the molecular weight distribution, and the softening point were measured. The results of these measurements are summarized in Table 1 below.

### [Production Examples 2 to 9]

Hydrogenated hydrocarbon resins were obtained in the same manner as in Production Example 1, except that the types and amounts of components to be added to the polymerization reactor and the conditions of hydrogenation were changed as shown in Table 1 below, respectively. Also for the obtained hydrogenated hydrocarbon resins of Production Examples 2 to 9, the hydrogenation rate, the number average molecular weight, the weight average molecular weight, the Z-average molecular weight, the molecular weight distribution, and the softening point were measured in the same manner as in the hydrogenated hydrocarbon resin of Production Example 1. The results of these measurements are summarized in Table 1 below.

### [Table 1]

**Table 1**

| Production Example | | 1 | 2 | 3 | 4 | 5 | 6 | 7 | 8 | 9 |
|---|---|---|---|---|---|---|---|---|---|---|
| Raw material monomer of hydrocarbon resin (parts) | | | | | | | | | | |
| 1,3-pentadiene | | 46.7 | 46.7 | 46.7 | 46.0 | 49.2 | 46.7 | 46.0 | 46.0 | 49.2 |
| C4-C6 alicyclic monoolefin | Cyclopentene | 15.5 | 15.5 | 15.5 | 15.5 | 27.6 | 15.5 | 15.5 | 15.5 | 27.6 |
| C4-C8 acyclic monoolefin | Isobutylene | 18.4 | 18.4 | 18.4 | 21.4 | 15.2 | 18.4 | 21.4 | 21.4 | 15.2 |
| | Diisobutylene | 0.1 | 0.1 | 0.1 | - | 7.3 | 0.1 | - | - | 7.3 |
| Alicyclic diolefin | Dicyclopentadiene | 0.1 | 0.1 | 0.1 | 1.1 | 0.1 | 0.1 | 1.1 | 1.1 | 0.1 |
| Other monomer | C4-C6 unsaturated hydrocarbon | 0.2 | 0.2 | 0.2 | - | 0.6 | 0.2 | - | - | 0.6 |
| Aromatic monomer | Styrene | 19.0 | 19.0 | 19.0 | - | - | 19.0 | - | - | - |
| | Indene | - | - | - | 16.0 | - | - | 16.0 | 16.0 | - |
| Number of parts of the entire monomer mixture | | 100.0 | 100.0 | 100.0 | 100.0 | 100.0 | 100.0 | 100.0 | 100.0 | 100.0 |
| Polymerization conditions | | | | | | | | | | |
| Solvent composition (parts) | C4-C6 saturated hydrocarbon | 7.2 | 7.2 | 7.2 | 6.8 | 7.4 | 7.2 | 6.8 | 6.8 | 7.4 |
| | Cyclopentane | 56.1 | 56.1 | 56.1 | 56.2 | 56.2 | 56.1 | 56.2 | 56.2 | 56.2 |
| Polymerization catalyst (parts) | Aluminum chloride | 0.75 | 0.75 | 0.75 | 0.75 | 0.9 | 0.75 | 0.75 | 0.75 | 0.9 |
| Polymerization temperature (°C) | | 70 | 70 | 70 | 70 | 70 | 70 | 70 | 70 | 70 |
| Hydrogenation conditions | | | | | | | | | | |
| Temperature (°C) | | 220 | 180 | 200 | 200 | 240 | - | - | 240 | - |
| Pressure (MPa) | | 1.2 | 0.5 | 1.3 | 1.3 | 1.5 | - | - | 4.8 | - |
| Hydrogen amount (times) | | 1.7 | 1.0 | 2.0 | 20 | 0.4 | - | - | 2.5 | - |
| Characteristics of hydrogenated hydrocarbon resin | | | | | | | | | | |
| Hydrogenation rate (%) | | 48.9 | 9.3 | 37.4 | 38.1 | 20 | 0 | 0 | 96.1 | 0 |
| Softening point (°C) | | 101 | 101 | 101 | 105 | 100 | 101 | 105 | 105 | 100 |
| Number average molecular weight (Mn) | | 1200 | 1200 | 1200 | 1300 | 1400 | 1200 | 1300 | 1300 | 1400 |
| Weight average molecular weight (Mw) | | 2300 | 2300 | 2300 | 2100 | 2900 | 2300 | 2100 | 2100 | 2900 |
| Z-average molecular weight (Mz) | | 4100 | 4100 | 4100 | 3500 | 6000 | 4100 | 3500 | 3500 | 6000 |
| Molecular weight distribution (Mw/Mn) | | 1.9 | 1.9 | 1.9 | 1.6 | 2.1 | 1.9 | 1.6 | 1.6 | 2.1 |
| Molecular weight distribution (Mz/Mw) | | 1.8 | 1.8 | 1.8 | 1.7 | 2.1 | 1.8 | 1.7 | 1.7 | 2.1 |

### [Example 1]

In a Banbury type mixer, 96.3 parts (content of rubber component: 70 parts, content of extension oil: 26.3 parts) of oil-extended emulsion polymerized styrene butadiene rubber (SBR) (trade name "Nipol 1739", manufactured by Zeon Corporation, bound styrene amount: 40%, vinyl bond content of butadiene unit moiety: 13.5 mol%, weight average molecular weight: 690,000, molecular weight distribution (Mw/Mn): 3.98, glass transition temperature (Tg): -35°C, containing 37.5 parts of extension oil with respect to 100 parts of rubber component), and 30 parts of solution polymerized butadiene rubber (BR) (trade name "Nipol BR1220", manufactured by Zeon Corporation, Vinyl bond content of butadiene unit moiety: 2 mol%, weight average molecular weight: 490,000, molecular weight distribution (Mw/Mn): 2.52, Mooney viscosity (ML1+4, 100°C): 44, glass transition temperature (Tg): -110°C) were masticated for 30 seconds, and then 46.6 parts of silica (manufactured by Rodia Co., Ltd., trade name "Zeosil1165MP"), 5 parts of carbon black (manufactured by Cabot Japan K.K., trade name "N339"), 6 parts of a silane coupling agent: bis[3-(triethoxysilyl)propyl]tetrasulfide (manufactured by Degussa AG, trade name "Si69") and 10 parts of the hydrogenated hydrocarbon resin obtained in Production Example 1 were added and kneaded for 90 seconds. Then, 23.4 parts of silica (manufactured by Rodia Co., Ltd., trade name "Zeosil1165MP"), 3 parts of zinc oxide, 2 parts of stearic acid, 2 parts of an anti-aging agent: N-phenyl-N'-(1,3-dimethylbutyl)-p-phenylenediamine (manufactured by Ouchi Shinko Chemical Industry Co., Ltd., trade name "Nocrac 6C") were added and further kneaded for 90 seconds. Then, 5 parts of process oil (Nippon Oil Corporation, trade name "Aromax T-DAE") was charged. Thereafter, the mixture was kneaded (primary kneading) at 145 to 155°C for 60 seconds or longer with a starting temperature of 90°C, and then discharged from the mixer.

The obtained kneaded product was cooled to room temperature, and then kneaded (secondary kneading) in a Banbury type mixer again at 90°C as a starting temperature for 2 minutes, and then the kneaded product was discharged from the mixer. The temperature of the kneaded material after the end of kneading was 145°C.

Then, using pair of rolls of 50°C, 1.7 parts of sulfur, 1.8 parts of a cross-linking accelerator: N-cyclohexyl-2-benzothiazolylsulfenamide (CBS, trade name "Nocceler CZ-G", manufactured by Ouchi Shinko Chemical Industry Co., Ltd.), and 1.7 parts of diphenylguanidine (DPG, trade name "Nocceler D", manufactured by Ouchi Shinko Chemical Industry Co., Ltd.) were added to the obtained kneaded product, and these were kneaded (cross-linking agent kneading), and then a sheet shaped rubber composition was taken out.

Note that, the kneading conditions of the primary kneading, the secondary kneading, and the cross-linking agent kneading were set to the conditions described below.

### (Kneading conditions for primary kneading and secondary kneading)

- Machine: Labo plastomill, Banbury type mixer B-600, manufactured by Toyo Seiki Seisaku-sho, Ltd.
- Filling ratio: 70 to 75 vol%
- rotor revolution: 50 rpm
- Starting temperature: 90°C

### (Kneading conditions for cross-linking agent kneading)

- Machine: Electric heating type high-temperature roll mill, manufactured by Ikeda Machinery Industry Co., Ltd.
- Roll size: 6φ × 16
- Front roll speed: 24 rpm
- Front roll to back roll rotation ratio: 1:1.22
- Roll temperature: 50±5°C
- Number of times of switching: Left twice and right twice
- Round-through width: Roll Spacing Approx. 0.8mm
- Number of times of round-through: 5 times

### [Examples 2 to 5 and Comparative Examples 1 to 4]

As shown in Table 2 below, rubber compositions were obtained in the same manner as in Example 1, except that the hydrogenated hydrocarbon resins obtained in Production Examples 2 to 9 were used instead of the hydrogenated hydrocarbon resins obtained in Production Example 1.

### [Evaluation]

The rubber compositions obtained in Examples 1 to 5 and Comparative Examples 1 to 4 were press-cross-linked at a press pressure of about 8 MPa and a press temperature of 160°C for 40 minutes, and then further aged in a constant temperature room at 23°C overnight to prepare a test piece of a cross-linked rubber of 150mm × 150mm × thickness 2mm.

For the rubber compositions and cross-linked rubbers obtained in Examples 1 to 5 and Comparative Examples 1 to 4, Mooney viscosity of the rubber compositions, and tensile strength (MPa), elongation (%), loss tangent tan δ, and wear resistance of the cross-linked rubbers were measured. The results are shown in Following table 2.

### [Table 2]

**Table 2**

| | | Example | | | | | Comparative Example | | | |
|---|---|---|---|---|---|---|---|---|---|---|
| | | 1 | 2 | 3 | 4 | 5 | 1 | 2 | 3 | 4 |
| Formulation of rubber composition (parts) | | | | | | | | | | |
| Diene-based rubber | SBR(Nipol1739) | 96.3 | 96.3 | 96.3 | 96.3 | 96.3 | 96.3 | 96.3 | 96.3 | 96.3 |
| | BR(Nipol BR1220) | 30 | 30 | 30 | 30 | 30 | 30 | 30 | 30 | 30 |
| Silica | | 70 | 70 | 70 | 70 | 70 | 70 | 70 | 70 | 70 |
| Carbon black | | 5 | 5 | 5 | 5 | 5 | 5 | 5 | 5 | 5 |
| Silane coupling agent | | 6 | 6 | 6 | 6 | 6 | 6 | 6 | 6 | 6 |
| Zinc oxide | | 3 | 3 | 3 | 3 | 3 | 3 | 3 | 3 | 3 |
| Stearic acid | | 2 | 2 | 2 | 2 | 2 | 2 | 2 | 2 | 2 |
| Anti-aging agent | | 2 | 2 | 2 | 2 | 2 | 2 | 2 | 2 | 2 |
| Process oil | | 5 | 5 | 5 | 5 | 5 | 5 | 5 | 5 | 5 |
| | Production Example 1 | 10 | - | - | - | - | - | - | - | - |
| | Production Example 2 | - | 10 | - | - | - | - | - | - | - |
| | Production Example 3 | - | - | 10 | - | - | - | - | - | - |
| | Production Example 4 | - | - | - | 10 | - | - | - | - | - |
| Resin | Production Example 5 | - | - | - | - | 10 | - | - | - | - |
| | Production Example 6 | - | - | - | - | - | 10 | - | - | - |
| | Production Example 7 | - | - | - | - | - | - | 10 | - | - |
| | Production Example 8 | - | - | - | - | - | - | - | 10 | - |
| | Production Example 9 | - | - | - | - | - | - | - | - | 10 |
| Sulfur | | 1.7 | 1.7 | 1.7 | 1.7 | 1.7 | 1.7 | 1.7 | 1.7 | 1.7 |
| Cross-linking accelerator | CBS | 1.8 | 1.8 | 1.8 | 1.8 | 1.8 | 1.8 | 1.8 | 1.8 | 1.8 |
| | DPG | 1.7 | 1.7 | 1.7 | 1.7 | 1.7 | 1.7 | 1.7 | 1.7 | 1.7 |
| Characteristics of rubber composition | | | | | | | | | | |
| Mooney viscosity (index) | | 100 | 100 | 101 | 97 | 103 | 100 | 97 | 97 | 103 |
| Characteristics of cross-linked rubber | | | | | | | | | | |
| Tensile strength (index) | | 100 | 100 | 100 | 99 | 98 | 100 | 99 | 99 | 96 |
| Elongation (index) | | 100 | 100 | 98 | 101 | 102 | 100 | 101 | 101 | 105 |
| Loss tangent tan δ (0°C) (index) | | 98 | 100 | 97 | 104 | 98 | 100 | 104 | 104 | 98 |
| Loss tangent tan δ (60°C) (index) | | 91 | 95 | 90 | 86 | 100 | 100 | 96 | 97 | 106 |
| Wear resistance (index) | | 113 | 104 | 115 | 119 | 106 | 100 | 102 | 104 | 95 |

As shown in Tables 1 and 2, a rubber composition comprising a hydrogenated hydrocarbon resin obtained by hydrogenating a hydrocarbon resin containing a C5-based petroleum resin or a C5/C9-based petroleum resin, and a diene-based rubber, the hydrogenated hydrocarbon resin having the hydrogenation rate of 0.1 to 80%, the weight average molecular weight (Mw) of 700 to 6,000, and the softening point of 80 to 150°C, was excellent in processability, and the obtained cross-linked rubber was excellent in tensile strength, elongation, and wet grip property, and particularly excellent in rolling resistance and wear resistance (Examples 1 to 5).

On the other hand, a cross-linked rubber composed of a rubber composition containing an unhydrogenated hydrocarbon resin instead of a hydrogenated hydrocarbon resin was inferior in wear resistance (Comparative Example 1,2,4). As for the rolling resistance, a cross-linked rubber composed of a rubber composition containing an unhydrogenated hydrocarbon resin (Comparative Example 1,2,4) was inferior to a cross-linked rubber composed of a hydrogenated hydrocarbon resin obtained by hydrogenating a hydrocarbon resin having the same monomer composition, respectively (Examples 1 to 5).

Further, a cross-linked rubber composed of a rubber composition containing a hydrogenated hydrocarbon resin having a hydrogenation rate of more than 80% (Comparative Example 3) was inferior in rolling resistance and wear resistance compared with a cross-linked rubber composed of a hydrogenated hydrocarbon resin obtained by hydrogenating a hydrocarbon resin having the same monomer composition (Example 4).

## Claims

1. Use of a rubber composition comprising a diene-based rubber and a hydrogenated hydrocarbon resin for a material of tire portion, wherein:
the content of the hydrogenated hydrocarbon resin is 1 to 200 parts by mass with respect to 100 parts by mass of the diene-based rubber;
the hydrogenated hydrocarbon resin is obtained by hydrogenating a hydrocarbon resin containing a C5-based petroleum resin or a C5/C9-based petroleum resin;
a hydrogenation rate of the hydrogenated hydrocarbon resin is within a range of 0.1 to 80%;
a weight average molecular weight (Mw) of the hydrogenated hydrocarbon resin is within a range of 700 to 6,000; and
a softening point of the hydrogenated hydrocarbon resin is within a range of 80 to 150°C.

2. The use of the rubber composition according to claim 1, wherein the hydrogenated hydrocarbon resin is obtained by hydrogenating a hydrocarbon resin containing an aliphatic monomer unit and an aromatic monomer unit.

3. The use of the rubber composition according to claim 1, wherein the hydrocarbon resin contains:
20 to 70% by mass of a 1,3-pentadiene monomer unit;
1 to 35% by mass of a C4-C6 alicyclic monoolefin monomer unit;
1 to 50% by mass of a C4-C8 acyclic monoolefin monomer unit;
0 to 10% by mass of an alicyclic diolefin monomer unit; and
0 to 50% by mass of an aromatic monomer unit,
a number average molecular weight (Mn) of the hydrogenated hydrocarbon resin is within a range of 400 to 3,000,
a Z-average molecular weight (Mz) of the hydrogenated hydrocarbon resin is within a range of 1,500 of 20,000,
a ratio of weight average molecular weight to number average molecular weight (Mw/Mn) of the hydrogenated hydrocarbon resin is within a range of 1.0 to 4.0, and
a ratio of Z-average molecular weight to weight average molecular weight (Mz/Mw) of the hydrogenated hydrocarbon resin is within a range of 1.0 to 4.0.

4. The use of the rubber composition according to claim 2 or 3, wherein the aromatic monomer includes at least one selected from the group consisting of a styrene compound, an indene compound, and a C9 fraction.

5. A pneumatic tire wherein a tread is formed through the use of the rubber composition according to any one of claims 1 to 4.

## Patentansprüche

1. Verwendung einer Kautschukzusammensetzung, die einen Kautschuk auf Dienbasis und ein hydriertes Kohlenwasserstoffharz umfasst, für ein Material eines Reifenteils, wobei
der Gehalt an hydriertem Kohlenwasserstoffharz 1 bis 200 Masseteile, bezogen auf 100 Masseteile des Kautschuks auf Dienbasis, beträgt;
das hydrierte Kohlenwasserstoffharz durch Hydrieren eines Kohlenwasserstoffharzes erhalten wird, das ein C5-basiertes Erdölharz oder ein C5/C9-basiertes Erdölharz enthält;
die Hydrierungsrate des hydrierten Kohlenwasserstoffharzes in einem Bereich von 0,1 bis 80% liegt;
das gewichtsmittlere Molekulargewicht (Mw) des hydrierten Kohlenwasserstoffharzes in einem Bereich von 700 bis 6000 liegt; und
der Erweichungspunkt des hydrierten Kohlenwasserstoffharzes in einem Bereich von 80 bis 150 °C liegt.

2. Verwendung der Kautschukzusammensetzung gemäß Anspruch 1, wobei das hydrierte Kohlenwasserstoffharz durch Hydrieren eines Kohlenwasserstoffharzes erhalten wird, das eine aliphatische Monomereinheit und eine aromatische Monomereinheit enthält.

3. Verwendung der Kautschukzusammensetzung gemäß Anspruch 1, wobei
das Kohlenwasserstoffharz enthält:
20 bis 70 Massenprozent einer 1,3-Pentadien-Monomereinheit;
1 bis 35 Massenprozent einer alicyclischen C4-C6-Monoolefin-Monomereinheit;
1 bis 50 Massenprozent einer C4-C8-acyclischen Monoolefin-Monomereinheit;
0 bis 10 Massenprozent einer alicyclischen Diolefin-Monomereinheit; und
0 bis 50 Massenprozent einer aromatischen Monomereinheit,
ein zahlenmittleres Molekulargewicht (Mn) des hydrierten Kohlenwasserstoffharzes in einem Bereich von 400 bis 3.000 liegt,
ein Z-mittleres Molekulargewicht (Mz) des hydrierten Kohlenwasserstoffharzes in einem Bereich von 1.500 bis 20.000 liegt,
ein Verhältnis des gewichtsmittleren Molekulargewichts zum zahlenmittleren Molekulargewicht (Mw/Mn) des hydrierten Kohlenwasserstoffharzes in einem Bereich von 1,0 bis 4,0 liegt und
ein Verhältnis des Z-mittleren Molekulargewichts zum gewichtsmittleren Molekulargewicht (Mz/Mw) des hydrierten Kohlenwasserstoffharzes in einem Bereich von 1,0 bis 4,0 liegt.

4. Verwendung der Kautschukzusammensetzung gemäß Anspruch 2 oder 3, wobei das aromatische Monomer mindestens eines aus der Gruppe bestehend aus einer Styrolverbindung, einer Indenverbindung und einer C9-Fraktion umfasst.

5. Luftreifen, bei dem eine Lauffläche unter Verwendung der Kautschukzusammensetzung gemäß einem der Ansprüche 1 bis 4 gebildet ist.

## Revendications

1. Utilisation d'une composition de caoutchouc comprenant un caoutchouc à base de diène et une résine hydrocarbonée hydrogénée pour un matériau de partie de pneu, dans laquelle :
la teneur en résine hydrocarbonée hydrogénée est comprise entre 1 et 200 parties en masse pour 100 parties en masse de caoutchouc à base de diène ;
la résine hydrocarbonée hydrogénée est obtenue par hydrogénation d'une résine hydrocarbonée contenant une résine pétrolière à base de C5 ou une résine pétrolière à base de C5/C9 ;
le taux d'hydrogénation de la résine hydrocarbonée hydrogénée est compris entre 0,1 et 80% ;
le poids moléculaire moyen en poids (Mw) de la résine hydrocarbonée hydrogénée est compris entre 700 et 6 000 ; et
le point de ramollissement de la résine hydrocarbonée hydrogénée est compris entre 80 et 150 °C.

2. Utilisation de la composition de caoutchouc selon la revendication 1, dans laquelle la résine hydrocarbonée hydrogénée est obtenue par hydrogénation d'une résine hydrocarbonée contenant un motif monomère aliphatique et un motif monomère aromatique.

3. Utilisation de la composition de caoutchouc selon la revendication 1, dans laquelle
la résine hydrocarbonée contient :
20 à 70% en masse d'un motif monomère 1,3-pentadiène ;
1 à 35% en masse d'un motif monomère mono-oléfinique alicyclique en C4-C6 ;
1 à 50% en masse d'un motif monomère de monooléfine acyclique en C4-C8 ;
0 à 10% en masse d'un motif monomère dioléfinique alicyclique ; et
0 à 50% en masse d'un motif monomère aromatique,
le poids moléculaire moyen en nombre (Mn) de la résine hydrocarbonée hydrogénée est compris entre 400 et 3 000,
le poids moléculaire moyen en Z (Mz) de la résine hydrocarbonée hydrogénée est compris dans entre 1 500 et 20 000,
le rapport entre le poids moléculaire moyen en poids et le poids moléculaire moyen en nombre (Mw/Mn) de la résine hydrocarbonée hydrogénée est compris entre 1,0 et 4,0, et
le rapport entre le poids moléculaire moyen en Z et le poids moléculaire moyen en poids (Mz/Mw) de la résine hydrocarbonée hydrogénée est compris entre 1,0 et 4,0.

4. Utilisation de la composition de caoutchouc selon la revendication 2 ou 3, dans laquelle le monomère aromatique comprend au moins un élément choisi dans le groupe constitué d'un composé styrénique, d'un composé indénique et d'une fraction en C9.

5. Pneumatique dans lequel une bande de roulement est formée à l'aide de la composition de caoutchouc selon l'une quelconque des revendications 1 à 4.
